(19) Europäisches Patentamt
European Patent Office
Office européen des brevets

(11) **EP 4 062 475 B1**

(12) # FASCICULE DE BREVET EUROPEEN

(45) Date de publication et mention de la délivrance du brevet:
**23.08.2023 Bulletin 2023/34**

(21) Numéro de dépôt: **20816550.6**

(22) Date de dépôt: **05.11.2020**

(51) Classification Internationale des Brevets (IPC):
***H01M 10/0567*** (2010.01) ***H01M 10/0565*** (2010.01)
***H01M 10/052*** (2010.01) ***H01M 10/42*** (2006.01)
***H01M 4/38*** (2006.01) *H01M 10/0568* (2010.01)
*H01M 10/0569* (2010.01)

(52) Classification Coopérative des Brevets (CPC):
**H01M 10/052; H01M 4/382; H01M 10/0565; H01M 10/0567; H01M 10/4235;** H01M 10/0568; H01M 10/0569; H01M 2300/0025; H01M 2300/0085; Y02E 60/10

(86) Numéro de dépôt international:
**PCT/FR2020/052006**

(87) Numéro de publication internationale:
**WO 2021/099714 (27.05.2021 Gazette 2021/21)**

(54) **ÉLECTROLYTE À BASE DE SEL DE LITHIUM**
ELEKTROLYT BASIEREND AUF EINEM LITHIUMSALZ
ELECTROLYTE BASED ON A LITHIUM SALT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.11.2019 FR 1913118**

(43) Date de publication de la demande:
**28.09.2022 Bulletin 2022/39**

(73) Titulaire: **ARKEMA FRANCE**
**92700 Colombes (FR)**

(72) Inventeurs:
- **SCHMIDT, Gregory**
**69493 PIERRE-BENITE cedex (FR)**
- **COLESNIC, Dmitri**
**60550 VERNEUIL EN HALATTE (FR)**

(74) Mandataire: **Arkema Patent**
**Arkema France**
**DRD-DPI**
**420, rue d'Estienne d'Orves**
**92705 Colombes Cedex (FR)**

(56) Documents cités:
**EP-A2- 0 971 431**
**KR-A- 20190 033 453**
**US-A1- 2017 117 584**
**US-B1- 9 257 719**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Processed by Luminess, 75001 PARIS (FR)

## Description

### DOMAINE DE L'INVENTION

La présente invention concerne une composition électrolytique comprenant au moins un sel de lithium.

La présente invention concerne également l'utilisation d'une telle composition électrolytique pour réduire/retarder la formation de dendrites.

### ARRIERE-PLAN TECHNIQUE

Un des enjeux majeurs dans le domaine des batteries est l'augmentation de la densité d'énergie en vue notamment d'améliorer l'autonomie des véhicules électriques. Une des solutions envisagées est un changement de matériaux d'anode. Actuellement le matériau d'anode est généralement du graphite qui possède une capacité de 350 mAh/g. Le passage à une anode lithium métal qui a une capacité de 3860 mAh/g permettrait d'augmenter grandement la densité d'énergie des batteries Li-ion. Il existe plusieurs de batteries Li-ion comprenant une anode en lithium métal : batteries lithium-ion dites classiques ou batteries Li-soufre.

Toutefois, les batteries Li-ion comprenant une anode Lithium métal ne sont à ce stade pas commercialisées en raison de problèmes de durée de vie principalement liés à la formation de dendrites. Une dendrite est un filament de lithium qui se crée lors de la charge de la batterie. Ce filament peut alors croître jusqu'à traverser le séparateur et engendrer un court-circuit entraînant la dégradation irréversible de la batterie Li-ion.

Pour lutter contre la formation de ces dendrites, de nouvelles technologies ont été développées telles que les électrolytes solides. Cependant, cette technologie ne permet pas d'atteindre les performances des batteries Li-ion obtenues avec les électrolytes liquide en raison notamment de leur faible conductivité ionique.

En ce qui concerne les électrolytes liquides, ils présentent certaines limitations intrinsèques telles que des problèmes de sécurité en raison d'éventuelles fuites de ces liquides contenant des solvants inflammables et volatils.

Le document EP 0 971 431 A2 divulgue une composition d'électrolyte gélifié comprenant un agent de gélification réversible, tel que l'acide 12-hydroxystéarique ou un dérivé de cyclohexanediamine, un agent de gélification irréversible comme le di(méth)acrylate de polyéthylène glycol, un sel d'électrolyte et un solvant, ainsi que son utilisation au sein d'un élément électrochimique tel qu'une batterie secondaire au lithium,

Le document US 2017/117584 A1 décrit un électrolyte liquide comprenant un sel électrolytique dissous dans un solvant non-aqueux, et un additif obtenu par polymérisation d'un composé diamine organique avec un monomère de type maléimide.

Les documents KR 2019 0033453 A et US 9 257 719 B1 se réfèrent à l'utilisation de composés diamines comme additif dans des solutions électrolytiques comprenant un sel de lithium dissous dans un solvant organique.

Il existe donc un besoin de nouveaux électrolytes remédiant au moins en partie à l'un des inconvénients susmentionnés.

Plus particulièrement, il existe un besoin pour de nouvelles compositions d'électrolyte permettant de réduire voire d'éliminer la formation de dendrites sur la surface d'électrodes.

### DESCRIPTION DE L'INVENTION

La présente demande concerne une composition d'électrolyte comprenant :

- i) au moins un sel de lithium;
- ii) au moins un solvant non-aqueux; et
- iii) au moins un produit de réaction d'un mélange comprenant :

  a) au moins une diamine sélectionnée parmi :

    a1) une diamine aliphatique linéaire en $C_2$ à $C_{24}$ ; et/ou
    a2) une diamine cycloaliphatique en $C_6$ à $C_{18}$ ; et/ou
    a3) une diamine aromatique de préférence en $C_6$ à $C_{24}$ ;

  b) au moins un acide carboxylique hydroxylé saturé en $C_3$-$C_{36}$ ;
  c) au moins un monoacide sélectionné parmi les acides carboxyliques linéaires saturés et non hydroxylés en $C_2$ à $C_{18}$;

ladite composition étant caractérisée en ce qu'elle a une viscosité mesurée à 23°C allant de $10^1$ à $10^7$ mPa.s.

Dans le cadre de l'invention, et sauf mention contraire, on utilise de manière interchangeable « composition d'électrolyte », « composition électrolytique » et « électrolyte ».

La mesure de viscosité à 23°C peut se faire conformément à la norme NF EN ISO 2555 à l'aide d'un viscosimètre Brookfield®. Typiquement, la mesure réalisée à 23°C peut se faire à l'aide d'un viscosimètre Brookfield®, d'une aiguille adaptée au domaine de viscosité et à une vitesse de rotation de 10 tours par minute (tr/mn).

De préférence, la composition a une viscosité mesurée à 23°C allant de $10^2$ à $10^6$ mPa.s.

***Composition***

De préférence, la composition d'électrolyte est une composition d'électrolyte pour batteries, et notamment pour batteries Li-ion.

Sel de lithium i)

Le sel de lithium peut être choisi dans le groupe constitué du $LiPF_6$ (hexafluorophosphate de lithium), du LiFSI, du LiTDI, du LiTFSI (bis(trifluorométhanesulfonyl)imidure de lithium), du $LiPO_2F_2$, du $LiB(C_2O_4)_2$, du $LiF_2B(C_2O_4)$, du $LiBF_4$, du $LiNO_3$, du $LiClO_4$, et de leurs mélanges.

Le sel de lithium est de préférence LiFSI.

Dans le cadre de l'invention, on utilise de manière équivalente les termes « sel de lithium de bis(fluorosulfonyl)imide », « lithium bis(fluorosulfonyl)imidure », « LiFSI », « $LiN(FSO_2)_2$ », ou « bis(fluorosulfonyl)imidure de lithium ».

Le 2-trifluorométhyl-4,5-dicyano-imidazolate de lithium, connu sous la dénomination LiTDI, possède la structure suivante :

[Chem 1]

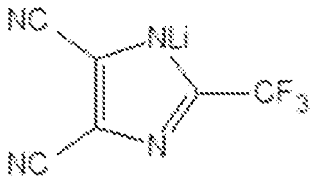

De préférence, les sels de lithium représentent entre 2% et 100% en poids de la totalité des sels présents dans la composition d'électrolyte, de préférence entre 25% et 100% en poids, et préférentiellement entre 50% et 100% en poids.

La concentration molaire totale en sel(s) de lithium dans la composition d'électrolyte peut aller de 0,01 mol/L à 5 mol/L, de préférence de 0,05 mol/L à 3 mol/L.

Solvant non-aqueux ii)

La composition d'électrolyte peut comprendre un solvant non-aqueux ou un mélange de solvants non-aqueux différents, tel que par exemple deux, trois ou quatre solvants différents.

Le solvant non-aqueux de la composition d'électrolyte peut être un solvant liquide, éventuellement gélifié par un polymère, ou un solvant polymère polaire éventuellement plastifié par un liquide.

Selon un mode de réalisation, le solvant non-aqueux est un solvant organique aprotique. De préférence, le solvant est un solvant organique polaire aprotique.

Selon un mode de réalisation, le solvant non-aqueux est choisi parmi dans le groupe constitué des éthers, des esters, des carbonates, des cétones, des hydrocarbures partiellement hydrogénés, des nitriles, des amides, des sulfoxydes, du sulfolane, du nitrométhane, de la 1,3-diméthyl-2-imidazolidinone, de la 1,3-diméthyl-3,4,5,6-tétrahydro-2(1,H)-pyrimidinone, de la 3-méthyl-2-oxazolidinone, et de leurs mélanges.

Parmi les éthers, on peut citer les éthers linéaires ou cycliques, tels que par exemple le diméthoxyéthane (DME), les éthers méthyliques des oligoéthylène glycols de 2 à 5 unités oxyéthylènes, le 1,3-dioxolane (CAS N°646-06-0), le dioxane, le dibutyle éther, le tétrahydrofurane, et leurs mélanges.

Parmi les esters, on peut citer les esters d'acide phosphorique ou les esters de sulfite, le formate de méthyle, l'acétate de méthyle, le propionate de méthyle, l'acétate d'éthyle, l'acétate de butyle, la gamma butyrolactone et leurs mélanges.

Parmi les cétones, on peut notamment citer la cyclohexanone.

Parmi les nitriles, on peut citer par exemple l'acétonitrile, le pyruvonitrile, le propionitrile, le méthoxypropionitrile,

le diméthylaminopropionitrile, le butyronitrile, l'isobutyronitrile, le valéronitrile, le pivalonitrile, l'isovaléronitrile, le glutaronitrile, le méthoxyglutaronitrile, le 2-méthylglutaronitrile, le 3-méthylglutaronitrile, l'adiponitrile, le malononitrile, et leurs mélanges.

Parmi les carbonates, on peut citer par exemple les carbonates cycliques tels que par exemple le carbonate d'éthylène (EC) (CAS : 96-49-1) , le carbonate de propylène (PC) (CAS : 108-32-7), le carbonate de butylène (BC) (CAS : 4437-85-8), le carbonate de diméthyle (DMC) (CAS : 616-38-6), le carbonate de diéthyle (DEC) (CAS : 105-58-8), le carbonate de méthyle éthyle (EMC) (CAS : 623-53-0), le carbonate de diphényle (CAS 102-09-0), le carbonate de méthyle phényle (CAS : 13509-27-8), le carbonate de dipropyle (DPC) (CAS : 623-96-1), le carbonate de méthyle et de propyle (MPC) (CAS : 1333-41-1), le carbonate d'éthyle et de propyle (EPC), le carbonate de vinylène (VC) (CAS : 872-36-6), le fluoroethylène carbonate (FEC) (CAS : 114435-02-8), le trifluoropropylène carbonate (CAS : 167951-80-6) ou leurs mélanges.

De préférence, le solvant non-aqueux est choisi dans le groupe constitué des carbonates, des éthers et de leurs mélanges.

On peut notamment citer les mélanges suivants :

- Diméthoxyéthane (DME),
- Diméthoxyéthane/1,3-dioxolane 1/1 en poids,
- Diméthoxyéthane/1,3-dioxolane 2/1 en poids,
- Diméthoxyéthane/1,3-dioxolane 3/1 en poids,
- Diméthoxyéthane/1,3-dioxolane 1/1 en volume,
- Diméthoxyéthane/1,3-dioxolane 2/1 en volume,
- Diméthoxyéthane/1,3-dioxolane 3/1 en volume,
- Ethylène carbonate / propylène carbonate / Diméthyl carbonate 1/1/1 en poids,
- Ethylène carbonate / propylène carbonate / Diéthyl carbonate 1/1/1 en poids,
- Ethylène carbonate / propylène carbonate / Ethylméthyl carbonate 1/1/1 en poids,
- Ethylène carbonate / Diméthyl carbonate 1/1 en poids,
- Ethylène carbonate / Diéthyl carbonate 1/1 en poids,
- Ethylène carbonate / Ethylméthyl carbonate 1/1 en poids,
- Ethylène carbonate / Diméthyl carbonate 3/7 en volume,
- Ethylène carbonate / Diéthyl carbonate 3/7 en volume,
- Ethylène carbonate / Ethylméthyl carbonate 3/7 en volume.

De préférence, la composition d'électrolyte susmentionnée comprend le diméthoxyéthane.

La teneur massique totale en solvant(s) non-aqueux dans la composition d'électrolyte peut être supérieure ou égale à 40% en poids, de préférence supérieure ou égale à 50% en poids, et avantageusement supérieure ou égale à 60% en poids par rapport au poids total de la composition.

Produit de réaction iii)

La composition électrolytique susmentionnée comprend iii) au moins un produit de réaction d'un mélange comprenant :

a) au moins une diamine sélectionnée parmi :

a1) une diamine aliphatique linéaire en $C_2$ à $C_{24}$ ; et/ou
a2) une diamine cycloaliphatique en $C_6$ à $C_{18}$ ; et/ou
a3) une diamine aromatique de préférence en $C_6$ à $C_{24}$ ;

b) au moins un acide carboxylique hydroxylé saturé en $C_3$-$C_{36}$ ;
c) au moins un monoacide sélectionné parmi les acides carboxyliques linéaires saturés et non hydroxylés en $C_2$ à $C_{18}$.

La diamine aliphatique linéaire a1) en $C_2$ à $C_{24}$ est de préférence une diamine en $C_2$ à $C_{12}$, et préférentiellement une diamine en $C_2$ à $C_8$, et encore plus préférentiellement une diamine en $C_2$ à $C_6$.

Selon un mode de réalisation préféré, les diamines aliphatiques linéaires a1) sont choisies dans le groupe constitué de l'éthylène diamine, de la propylène diamine, de la butylène (ou tetraméthylène) diamine, de la pentaméthylène diamine, de l'hexaméthylène diamine, et de façon encore plus préférée, la diamine aliphatique linéaire est l'éthylène diamine.

La diamine cycloaliphatique a2) en $C_6$ à $C_{18}$ est de préférence une diamine cycloaliphatique en $C_6$ à $C_{12}$.

Comme exemple de diamines cycloaliphatiques a2) convenables, on peut citer : la diamine-1 ,3, -1,4 et -1,2 et en particulier -1,3 ou -1,4 cyclohexane, l'isophorone diamine, la bis (aminométhyl)-1 ,3, -1,4 ou -1,2 cyclohexane (dérivé de l'hydrogénation de respectivement m-, p-, o- xylylène diamine), de préférence la bis (aminométhyl)-1,3 ou -1,4 cyclohexane, décahydronaphtalène diamine, le bis(3-méthyl, bis (amino-4 cyclohexyl) méthane (BMACM) ou bis (amino-4 cyclohexyl) méthane (BACM), le 1-{[4-(aminométhyl)cyclohexyl]oxy}propan-2-amine.

La diamine aromatique a3) est encore plus préférentiellement une diamine aromatique en $C_6$ à $C_{12}$.

Comme exemple de diamines aromatiques a3), on peut citer : la m-, p- xylylène diamine, la m-, p- phénylène diamine et la m-, p- toluylène diamine.

L'acide carboxylique hydroxylé saturé b) en $C_3$-$C_{36}$ est de préférence choisi dans le groupe constitué de l'acide 12-hydroxystéarique (12-HSA), l'acide 9- ou 10- hydroxystéarique (9-HSA ou 10-HSA), l'acide 14-hydroxyeicosanoïque (14-HEA), et leurs mélanges.

Le monoacide c) est de préférence sélectionné parmi les acides carboxyliques linéaires saturés et non hydroxylés en $C_6$ à $C_{12}$.

Le monoacide sélectionné parmi les acides carboxyliques linéaires saturés et non hydroxylés en $C_2$ à $C_{18}$ est de préférence choisi parmi l'acide acétique, l'acide propionique, l'acide butyrique, l'acide pentanoïque, l'acide hexanoïque (caproïque), l'acide heptanoïque, l'acide octanoïque, l'acide décanoïque et leurs mélanges.

D'une manière générale, le rapport molaire diamine a/(acide carboxylique hydroxylé saturé b + monoacide c) peut varier de 0,9 à 1,1, de préférence de 0,95 à 1,05, et encore plus préférentiellement vaut 1/1.

Le monoacide c) peut être présent à un taux tel que le rapport molaire de l'acide carboxylique hydroxylé saturé b/(acide carboxylique hydroxylé saturé b + monoacide c) va de 0,01 à 0,99, de préférence de 0,05 à 0,95.

Selon un mode de réalisation, ledit au moins produit de réaction iii) susmentionné est sous forme de poudre micronisée, de préférence ayant une taille moyenne en volume inférieure à 20 $\mu$m plus préférentiellement inférieure à 15 $\mu$m.

La détermination de ladite taille moyenne en volume peut être réalisée avec un appareil de mesure équipé d'un détecteur laser.

La micronisation peut être réalisée par broyage mécanique suivie éventuellement d'un tamisage ou par broyage à jet d'air pour l'obtention des poudres les plus fines avec une distribution de granulométrie contrôlée et plus étroite.

Selon un mode de réalisation préféré, la composition électrolytique selon l'invention comprend au moins un produit de réaction d'un mélange comprenant :

a) au moins une diamine aliphatique linéaire en $C_2$ à $C_{24}$ de préférence choisie parmi l'hexaméthylène diamine et l'éthylène diamine;
b) au moins un acide carboxylique hydroxylé saturé en $C_3$-$C_{36}$ ;
c) au moins un monoacide sélectionné parmi les acides carboxyliques linéaires saturés et non hydroxylés en $C_2$ à $C_{18}$.

Le au moins un produit de réaction iii) peut être obtenu suite au mélange des composés a), b) et c), et à leur réaction à une température allant de 140°C à 250°C, de préférence de 150°C à 200°C. La réaction est de préférence réalisée sous atmosphère inerte.

La teneur massique totale en produit(s) de réaction iii) susmentionné dans la composition d'électrolyte peut aller de 0,5% à 20% en poids, de préférence de 1 à 15% en poids, et encore plus préférentiellement de 2% à 10% en poids par rapport au poids total de la composition.

<u>Additif(s)</u>

La composition électrolytique susmentionnée peut comprendre au moins un additif électrolytique.

L'additif électrolytique peut être choisi dans le groupe constitué du carbonate de fluoroéthylène (FEC), du vinylène carbonate, du difluoroéthylènecarbonate, du 4-vinyl-1,3-dioxolan-2-one, de la pyridazine, de la vinyl pyridazine, de la quinoline, de la vinyl quinoline, du butadiène, du sébaconitrile, des alkyldisulfures, du fluorotoluène, du 1,4-diméthoxytétrafluorotoluène, du t-butylphenol, du di-t-butylphenol, du tris(pentafluorophenyl)borane, des oximes, des époxydes aliphatiques, des biphényls halogénés, des acides métacryliques, du carbonate d'allyle éthyle, de l'acétate de vinyle, de l'adipate de divinyle, de l'acrylonitrile, du 2-vinylpyridine, de l'anhydride maléïque, du cinnamate de méthyle, des phosphonates, des composés silane contenant un vinyle, du 2-cyanofurane, du lithium (bisoxalatoborate) (LiBOB), du lithium difluorooxalato borate (LiDFOB), du $LiPO_2F_2$, et de leurs mélanges.

L'additif électrolytique est de préférence choisi dans le groupe constitué du carbonate de fluoroéthylène (FEC), du vinylène carbonate, du lithium difluorooxalato borate (LiDFOB), du $LiPO_2F_2$, et de leurs mélanges.

De façon encore plus préférée, l'additif électrolytique est le carbonate de fluoroéthylène (FEC).

La teneur totale massique en additif(s) électrolytique(s) dans la composition d'électrolyte peut aller de 0,01 % à 1 0%, de préférence de 0,1 % à 4% en masse par rapport à la masse totale de la composition. Préférentiellement, la

teneur en additif(s) (A) dans la composition d'électrolyte est inférieure ou égale à 3% en masse par rapport à la masse totale de la composition.

La composition d'électrolyte peut être préparée par mélange des différents composés, par exemple à 23°C.

***Cellule électrochimique***

La présente demande concerne également une cellule électrochimique comportant une électrode négative, une électrode positive, et une composition d'électrolyte telle qu'ici définie ci-dessus, notamment interposée entre l'électrode négative et l'électrode positive. La cellule électrochimique peut aussi comprendre un séparateur, dans lequel est imprégnée la composition d'électrolyte telle que définie ci-dessus.

La présente invention concerne également une batterie comprenant au moins une cellule électrochimique telle que décrite ci-dessus. Lorsque la batterie comprend plusieurs cellules électrochimiques selon l'invention, lesdites cellules peuvent être assemblées en série et/ou en parallèle.

Dans le cadre de l'invention, par électrode négative, on entend l'électrode qui fait office d'anode, quand la batterie débite du courant (c'est-à-dire lorsqu'elle est en processus de décharge) et qui fait office de cathode lorsque la batterie est en processus de charge.

L'électrode négative comprend typiquement un matériau électrochimiquement actif, éventuellement un matériau conducteur électronique, et éventuellement un liant.

Dans le cadre de l'invention, on entend par « matériau électrochimiquement actif », un matériau capable d'insérer de manière réversible des ions.

Dans le cadre de l'invention, on entend par « matériau conducteur électronique » un matériau capable conduire les électrons.

Selon un mode préféré, l'électrode négative de la cellule électrochimique comprend, comme matériau électrochimiquement actif, du lithium.

Plus particulièrement, l'électrode négative de la cellule électrochimique comprend du lithium métal ou un alliage à base de lithium, qui peuvent se présenter sous forme de film ou de tige. Parmi les alliages à base de lithium, on peut par exemple citer les alliages lithium-aluminium, alliages lithium-silice, alliages lithium-étain, Li-Zn, Li-Sn, $Li_3Bi$, $Li_3Cd$, $Li_3SB$.

Un exemple d'électrode négative peut être un film de lithium vif préparé par laminage, entre des rouleaux, d'un feuillard de lithium.

Dans le cadre de l'invention, par électrode positive, on entend l'électrode qui fait office de cathode, quand la batterie débite du courant (c'est-à-dire lorsqu'elle est en processus de décharge) et qui fait office d'anode lorsque la batterie est en processus de charge.

L'électrode positive comprend typiquement un matériau électrochimiquement actif, éventuellement un matériau conducteur électronique, et éventuellement un liant.

L'électrode positive de la cellule électrochimique peut comprendre un matériau électrochimiquement actif choisi parmi le dioxyde de manganèse ($MnO_2$), l'oxyde de fer, l'oxyde de cuivre, l'oxyde de nickel, les oxydes composites lithium-manganèse (par exemple $Li_xMn_2O_4$ ou $Li_xMnO_2$), les oxydes compositions lithium-nickel (par exemple $Li_xNiO_2$), les oxydes compositions lithium-cobalt (par exemple $Li_xCoO_2$), les oxydes composites lithium-nickel-cobalt (par exemple $LiNi_{1-y}Co_y02$), les oxydes composites lithium-nickel-cobalt-manganèse (par exemple $LiNi_xMn_yCo_zO_2$ avec x+y+z = 1), les oxydes composites lithium-nickel-cobalt-manganèse enrichis en lithium (par exemple $Li_{1+x}(NiMnCo)_{1-x}O_2$), les oxydes composites de lithium et de métal de transition, les oxydes composites de lithium-manganèse-nickel de structure spinelle (par exemple $Li_xMn_{2-y}Ni_yO_4$), les oxydes de lithium-phosphore de structure olivine (par exemple $Li_xFePO_4$, $Li_xFe_{1-y}Mn_yPO_4$ ou $Li_xCoPO_4$), le sulfate de fer, les oxydes de vanadium, et leurs mélanges.

De préférence, l'électrode positive comprend un matériau électrochimiquement actif choisi parmi $LiCoO_2$, $LiFePO_4$ (LFP), $LiMn_xCo_yNi_zO_2$ (NMC, avec x+y+z = 1), $LiFePO_4F$, $LiFeSO_4F$, $LiNiCoAlO_2$ et leurs mélanges.

Le matériau de l'électrode positive peut aussi comprendre, outre le matériau électrochimiquement actif, un matériau conducteur électronique comme une source de carbone, incluant, par exemple, du noir de carbone, du carbone Ketjen®, du carbone Shawinigan, du graphite, du graphène, des nanotubes de carbone, des fibres de carbone (tels les fibres de carbone formées en phase gazeuse (VGCF), du carbone non-poudreux obtenu par carbonisation d'un précurseur organique, ou une combinaison de deux ou plus de ceux-ci. D'autres additifs peuvent aussi être présents dans le matériau de l'électrode positive, comme des sels de lithium ou des particules inorganiques de type céramique ou verre, ou encore d'autres matériaux actifs compatibles (par exemple, du soufre).

Le matériau de l'électrode positive peut aussi comprendre un liant. Des exemples non-limitatifs de liants comprennent les liants polymères polyéthers linéaires, ramifiés et/ou réticulé (par exemple, des polymères basés sur le poly(oxyde d'éthylène) (PEO), ou le poly(oxyde de propylène) (PPO) ou d'un mélange des deux (ou un co-polymère EO/PO), et comprenant éventuellement des unités réticulables), des liants solubles dans l'eau (tels que SBR (caoutchouc styrène-butadiène), NBR (caoutchouc acrylonitrile-butadiène), HNBR (NBR hydrogéné), CHR (caoutchouc d'épichlorohydrine), ACM (caoutchouc d'acrylate)), ou des liants de type polymères fluorés (tels que PVDF (fluorure de polyvinylidène), PTFE (polytétrafluoroéthylène)), et leurs combinaisons). Certains liants, comme ceux solubles dans l'eau, peuvent aussi comprendre un additif comme le CMC (carboxyméthylcellulose).

***Utilisations***

La présente demande concerne aussi l'utilisation d'une composition d'électrolyte telle que définie ci-dessus, dans une batterie, en particulier une batterie Li-ion, ladite batterie comprenant de préférence une électrode négative à base de lithium, et notamment à base de lithium métal.

Ces batteries peuvent être utilisées dans des appareils nomades, par exemple les téléphones portables, les appareils photos, les tablettes ou les ordinateurs portables, dans des véhicules électriques, ou dans le stockage d'énergie renouvelable.

La présente invention concerne également l'utilisation de la composition d'électrolyte telle que décrite ci-dessus dans une cellule électrochimique comprenant au moins une électrode négative comprenant du lithium, et en particulier du lithium métal, pour réduire ou supprimer la croissance de dendrites de lithium sur la surface de ladite électrode.

La composition d'électrolyte selon l'invention permet avantageusement de réduire la formation de dendrites de lithium dans une cellule électrochimique comprenant du lithium comme matériau électrochimiquement actif d'anode. Ceci permet avantageusement d'améliorer la durée de vie de la batterie.

La composition d'électrolyte selon l'invention permet avantageusement de réduire les risques de fuite par rapport aux compositions d'électrolyte liquides (faible viscosité).

Dans le cadre de l'invention, par « comprise entre x et y » ou « entre x et y », on entend un intervalle dans lequel les bornes x et y sont incluses. Par exemple, la gamme «comprise entre 85% et 1 00% » ou « de 85% à 100% » inclus notamment les valeurs 85 et 100%.

Tous les modes de réalisation décrits ci-dessus peuvent être combinés les uns avec les autres.

Les exemples suivants illustrent l'invention sans toutefois la limiter.

**PARTIE EXPERIMENTALE**

Abréviations

EC : carbonate d'éthylène
EMC : carbonate de méthyle éthyle (CAS 623-53-0)
FEC : carbonate de fluoroéthylène
DOL : Dioxolane
DME : Diméthoxyéthane
12-HSA : acide 12-hydroxystéarique
EDA : éthylène diamine

Fournisseurs

EC : BASF Corporation
EMC : BASF Corporation
FEC : BASF Corporation
$LiPF_6$ : BASF Corporation
DOL : BASF Corporation
DME : BASF Corporation
12-HSA : Jayant
EDA : Sigma aldrich
Acide décanoïque : Unilever

Le LiFSI utilisé est notamment obtenu par le procédé décrit dans la demande WO2015/158979, tandis que le LiTDI est issu du procédé décrit dans la demande WO2013/072591.

Méthode de mesure de l'indice d'amine :

L'indice d'amine a été déterminé conformément à la norme DIN 53176 en utilisant un mélange xylène / éthanol 50:50 v/v comme solvant de titrage. L'échantillon est pesé dans un erlenmeyer de 250 ml et dissous dans 100 ml du mélange chaud de xylène / éthanol (environ 90°C) sur un agitateur magnétique. L'échantillon est ensuite placé sur l'agitateur magnétique du titrimètre, l'électrode est bien immergée et le mélange est titré avec une solution isopropanolique HCl 0,1 N.

Méthode de mesure de l'indice d'acide :

L'indice d'acide a été déterminé conformément à la norme DIN EN ISO 2114 en utilisant un mélange xylène/éthanol 50:50 v/v comme solvant de titrage. L'échantillon est pesé dans un erlenmeyer de 250 ml et dissous dans 100 ml du mélange chaud de xylène / éthanol (environ 90 °C) sur un agitateur magnétique. L'échantillon est ensuite placé sur l'agitateur magnétique du titrimètre, l'électrode est bien immergée et le mélange est titré avec une solution éthanolique KOH 0,1.

Méthode de mesure de la viscosité

La viscosité a été mesurée conformément à la norme NF EN ISO 2555 à l'aide d'un viscosimètre Brookfield® à 23°C (mobile : S 5). Un mobile de forme cylindrque tourne à une vitesse de rotation constante autour de son axe dans le produit à examiner. La résistance qui est exercée par le fluide sur le mobile, dépend de la viscosité du produit. Cette résistance provoque la torsion du ressort spirale, qui est traduite en une valeur de viscosité. La vitesse du mobile est fixée à 10 tr/mn.

Méthode inversion de tube

Méthode visuelle par inversion de tube: Le diamide préparé est dispersé dans un tube contenant l'électrolyte liquide et est chauffé ensuite jusqu'à dissolution totale. Après refroidissement à température ambiante et 24h de repos, le tube est retourné pour étudier la formation de gel. La formation du gel est le résultat de l'auto-assemblage de l'amide grâce aux interactions non covalentes (liaison H, forces de Van der Waals, etc) pour donner un réseau 3D de fibres. L'apparence solide du gel est le résultat de l'immobilisation de l'électrolyte par le réseau 3D de fibres du diamide.

**Exemple 1 : Fabrication du diamide A**

Dans un ballon de 1 litre équipé d'un thermomètre, d'un Dean Stark, d'un condensateur et d'un agitateur, 29,46 g d'éthylène diamine (0,98 moles, 1 éq), 113,73 g d'acide 12-hydroxy stéarique (0,36 moles, 0,74 éq) et 106,81 g d'acide décanoique (0,62 mol, 1,26 éq) sont ajoutés. Le mélange est chauffé à 180°C sous atmosphère inerte. L'eau éliminée s'accumule dans le Dean Stark dès 150°C. La réaction est contrôlée par l'indice d'acide et d'amine. Lorsque les indices d'acide et d'amine sont respectivement inférieurs à 5, la réaction est arrêtée. Le mélange réactionnel est refroidi à 140°C et est déchargé dans un moule siliconé. Une fois refroidi à la température ambiante le produit et transformé en écailles.

**Exemple 2 : Fabrication du diamide B**

Dans un ballon de 1 litre équipé d'un thermomètre, d'un Dean Stark, d'un condensateur et d'un agitateur, 29,46 g d'éthylène diamine (0,98 moles, 1 éq), 154,79 g d'acide 12-hydroxy stéarique (0,49 moles, 1 éq) et 84,41 g d'acide décanoique (0,49 mol, 1 éq) sont ajoutés. Le mélange est chauffé à 180°C sous atmosphère inerte.L'eau éliminée s'accumule dans le Dean Stark dès 150°C. La réaction est contrôlée par l'indice d'acide et d'amine. Lorsque les indices d'acide et d'amine sont respectivement inférieurs à 5, la réaction est arrêtée. Le mélange réactionnel est refroidi à 140°C et est déchargé dais un moule siliconé. Une fois refroidi à la température ambiante le produit et transformé en écailles.

**Exemple 3 : Fabrication d'électrolyte gel**

Le produit de l'exemple 1 (ou de l'exemple 2) a été dissout dans une composition liquide sous agitation (1M LiFSI et un mélange de solvants DOL/DME dans un ratio pondéral 50/50) à une concentration donnée en chauffant et ensuite en refroidissant doucement à température ambiante pour permettre l'obtention d'un gel. La gélification a été confirmée par la méthode de l'inversion du tube à essai.

[Tableau 1]

| | Produit dissout | % en masse par rapport à la masse totale solvant DOL/DME + LiFSI | Aspect de l'électrolyte final | Viscosité mesurée à 23 °C (10 tr/mn) |
|---|---|---|---|---|
| Electrolyte A | Produit de l'exemple 1 | 5 | Gel | 52 000 mPa.s |
| Electrolyte B | Produit de l'exemple 1 | 7,5 | Gel | 63 000 mPa.s |
| Electrolyte C | Produit de l'exemple 2 | 5 | Gel | 120 mPa.s |
| Electrolyte D | Produit de l'exemple 2 | 7,5 | Gel | 2 100 mPa.s |

**Exemple 4** : **Test de dendrite**

Un test de dendrite a été réalisé avec l'électrolyte A préparé à l'exemple 3, et avec un électrolyte de référence correspondant à du LiFSI à 1 mol/L dans un mélange de solvant DOUDME 50/50 en masse (Réf 1).

Méthode : La méthode consiste à charger et décharger une batterie symétrique Li métal/Li métal, le potentiel de la batterie est alors mesuré. Ce potentiel est proportionnel à la surface des électrodes donc l'apparition de dendrites se traduit par une augmentation de potentiel.

Système utilisé :

Cathode : Lithium métal
Anode : Lithium métal

La batterie est chargée à l'aide d'un courant positif de 0,25 mA jusqu'à une densité d'énergie de 0,25 mAh. La batterie est ensuite déchargée à l'aide d'un courant négatif de 0,25 mA jusqu'à une densité d'énergie de 0,25 mAh.

Résultats :

La figure 1 montre le potentiel (en e/V) en fonction du temps (en heure) pour l'électrolyte A et l'électrolyte de référence Ref 1.

La figure 1 montre la formation des dendrites est retardée avec l'électrolyte A (invention) par rapport à la composition de référence (Réf 1). L'électrolyte C peut avantageusement être utilisé dans une batterie comprenant une anode en lithium métal sans risque pour la sécurité, et avec une meilleure durée de vie.

**Exemple 5** : **Conductivité ionique**

Méthode :

Une cellule de conductivité est alors plongée dans chacune des solutions et trois spectroscopies d'impédance ont été réalisées. Ces spectroscopies sont réalisées entre 500 mHz et 100 kHz avec une amplitude de 10 mV. La constante de la cellule utilisée est de 1.12 et la conductivité ionique est calculée selon la formule suivante :

$$\sigma = \frac{1}{R} \times 1.12$$

avec R représente la résistance qui est obtenue par régression linéaire de la courbe Im(Z) = f (Re(Z)). Dans le cas particulier de Im(Z) = 0, R est égale à l'opposé de l'ordonnée à l'origine divisée par le coefficient directeur de l'équation de la régression linéaire.

Système utilisé :

[Tableau 2]

| Additif | Quantité | Electrolyte | Conductivité ionique (mS/cm) |
|---|---|---|---|
| Diamide A (exemple 1) | 5% en poids | Electrolyte A de l'exemple 3 : 1M LiFSI DOL/DME 50/50 | 0,11 |
| Diamide A (exemple 1) | 5% en poids | Electrolyte E : 1M LiFSI DME | 0,15 |
| Diamide B (exemple 2) | 5% en poids | Electrolyte C : 1M LiFSI DOL/DME 50/50 | 0,26 |
| POE | O/Li = 16 | $LiPF_6$ | $10^{-5}$ |

**Ref** B.K. Choi, Y.W. Kim, Electrochim Acta. (2004) 2307-2313

**Revendications**

1. Composition d'électrolyte comprenant :

   - i) au moins un sel de lithium;
   - ii) au moins un solvant non-aqueux; et
   - iii) au moins un produit de réaction d'un mélange comprenant :

     a) au moins une diamine sélectionnée parmi :

       a1) une diamine aliphatique linéaire en $C_2$ à $C_{24}$ ; et/ou
       a2) une diamine cycloaliphatique en $C_6$ à $C_{18}$ ; et/ou
       a3) une diamine aromatique de préférence en $C_6$ à $C_{24}$ ;

     b) au moins un acide carboxylique hydroxylé saturé en $C_3$-$C_{36}$ ;
     c) au moins un monoacide sélectionné parmi les acides carboxyliques linéaires saturés et non hydroxylés en $C_2$ à $C_{18}$;

   ladite composition étant **caractérisée en ce qu'**elle a une viscosité mesurée à 23°C allant de $10^1$ à $10^7$ mPa.s.

2. Composition d'électrolyte selon la revendication 1, **caractérisée en ce que** le sel de lithium est choisi dans le groupe constitué du $LiPF_6$ (hexafluorophosphate de lithium), du LiFSI, du LiTDI, du LiTFSI (bis(trifluorométhanesulfonyl)imidure de lithium), du $LiPO_2F_2$, du $LiB(C_2O_4)_2$, du $LiF_2B(C_2O_4)$, du $LiBF_4$, du $LiNO_3$, du $LiClO_4$, et de leurs mélanges.

3. Composition d'électrolyte selon l'une quelconque des revendications 1 ou 2, **caractérisée en ce que** le sel de lithium est LiFSI.

4. Composition d'électrolyte selon l'une quelconque des revendications 1 à 3, **caractérisée en ce que** la concentration molaire totale en sel(s) de lithium dans la composition d'électrolyte va de 0,01 mol/L à 5 mol/L, de préférence de 0,05 mol/L à 3 mol/L.

**5.** Composition d'électrolyte selon l'une quelconque des revendications 1 à 4, **caractérisée en ce que** le solvant non-aqueux est choisi parmi dans le groupe constitué des éthers, des esters, des carbonates, des cétones, des hydrocarbures partiellement hydrogénés, des nitriles, des amides, des sulfoxydes, du sulfolane, du nitrométhane, de la 1,3-diméthyl-2-imidazolidinone, de la 1,3-diméthyl-3,4,5,6-tétrahydro-2(1,H)-pyrimidinone, de la 3-méthyl-2-oxazolidinone, et de leurs mélanges.

**6.** Composition d'électrolyte selon l'une quelconque des revendications 1 à 5, **caractérisée en ce que** le solvant non-aqueux est choisi dans le groupe constitué des carbonates, des éthers et de leurs mélanges.

**7.** Composition d'électrolyte selon l'une quelconque des revendications 1 à 5, **caractérisée en ce que** la teneur massique totale en solvant(s) non-aqueux dans la composition d'électrolyte est supérieure ou égale à 40% en poids, de préférence supérieure ou égale à 50% en poids, et avantageusement supérieure ou égale à 60% en poids par rapport au poids total de la composition.

**8.** Composition d'électrolyte selon l'une quelconque des revendications 1 à 6, **caractérisée en ce que** les diamines aliphatiques linéaires a1) sont choisies dans le groupe constitué de l'éthylène diamine, de la propylène diamine, de la butylène (ou tetraméthylène) diamine, de la pentaméthylène diamine, de l'hexaméthylène diamine, et de façon encore plus préférée, la diamine aliphatique linéaire est l'éthylène diamine.

**9.** Composition d'électrolyte selon l'une quelconque des revendications 1 à 7, **caractérisée en ce que** l'acide carboxylique hydroxylé b) saturé en $C_3$-$C_{36}$ est choisi dans le groupe constitué de l'acide 12-hydroxystéarique (12-HSA), l'acide 9- ou 10-hydroxystéarique (9-HSA ou 10-HSA), l'acide 14-hydroxyeicosanoïque (14-HEA), et leurs mélanges.

**10.** Composition d'électrolyte selon l'une quelconque des revendications 1 à 8, **caractérisée en ce que** le monoacide c) est choisi parmi l'acide acétique, l'acide propionique, l'acide butyrique, l'acide pentanoïque, l'acide hexanoïque (caproïque), l'acide heptanoïque, l'acide octanoïque, l'acide décanoïque et leurs mélanges.

**11.** Composition d'électrolyte selon l'une quelconque des revendications 1 à 10, **caractérisée en ce que** le rapport molaire diamine a)/(acide carboxylique hydroxylé saturé b + monoacide c) va de 0,9 à 1,1, de préférence de 0,95 à 1,05, et encore plus préférentiellement vaut 1/1.

**12.** Composition d'électrolyte selon l'une quelconque des revendications 1 à 11, **caractérisée en ce qu'**elle comprend au moins un produit de réaction d'un mélange comprenant :

a) au moins une diamine aliphatique linéaire en $C_2$ à $C_{24}$ de préférence choisie parmi l'hexaméthylène diamine et l'éthylène diamine;
b) au moins un acide carboxylique hydroxylé saturé en $C_3$-$C_{36}$ ;
c) au moins un monoacide sélectionné parmi les acides carboxyliques linéaires saturés et non hydroxylés en $C_2$ à $C_{18}$.

**13.** Composition d'électrolyte selon l'une quelconque des revendications 1 à 12, **caractérisée en ce que** la teneur massique totale en produit(s) de réaction iii) dans la composition d'électrolyte va de 0,5 à 20 % en poids, de préférence de 1 à 15% en poids, et encore plus préférentiellement de 2% à 10% en poids par rapport au poids total de la composition.

**14.** Composition d'électrolyte selon l'une quelconque des revendications 1 à 13, **caractérisée en ce que** le rapport molaire de l'acide carboxylique hydroxylé saturé b/(acide carboxylique hydroxylé saturé b + monoacide c) va de 0,01 à 0,99, de préférence de 0,05 à 0,95.

**15.** Composition d'électrolyte selon l'une quelconque des revendications 1 à 14, **caractérisée en ce qu'**elle comprend au moins un additif électrolytique de préférence choisi dans le groupe constitué du carbonate de fluoroéthylène, du vinylène carbonate, du difluoroéthylènecarbonate, du 4-vinyl-1,3-dioxolan-2-one, de la pyridazine, de la vinyl pyridazine, de la quinoline, de la vinyl quinoline, du butadiène, du sébaconitrile, des alkyldisulfures, du fluorotoluène, du 1,4-diméthoxytétrafluorotoluène, du t-butylphenol, du di-t-butylphenol, du tris(pentafluorophenyl)borane, des oximes, des époxydes aliphatiques, des biphényls halogénés, des acides métacryliques, du carbonate d'allyle éthyle, de l'acétate de vinyle, de l'adipate de divinyle, de l'acrylonitrile, du 2-vinylpyridine, de l'anhydride maléïque, du cinnamate de méthyle, des phosphonates, des composés silane contenant un vinyle, du 2-cyanofurane, du

lithium (bisoxalatoborate) (LiBOB), du lithium difluorooxalato borate, du $LiPO_2F_2$, et de leurs mélanges.

**16.** Cellule électrochimique comportant une électrode négative, une électrode positive, et une composition d'électrolyte telle qu'ici définie selon l'une quelconque des revendications 1 à 15, notamment interposée entre l'électrode négative et l'électrode positive.

**17.** Cellule selon la revendication 16, **caractérisée en ce que** l'électrode négative comprend, comme matériau électrochimiquement actif, du lithium.

**18.** Batterie de préférence batterie Li-ion, comprenant la cellule électrochimique selon l'une des revendications 16 ou 17.

**19.** Utilisation de la composition d'électrolyte telle que définie selon l'une quelconque des revendications 1 à 15, dans une cellule électrochimique comprenant au moins une électrode négative comprenant du lithium, et en particulier du lithium métal, pour réduire ou supprimer la croissance de dendrites de lithium sur la surface de ladite électrode.

**Patentansprüche**

**1.** Elektrolytzusammensetzung, umfassend:

- i) mindestens ein Lithiumsalz;
- ii) mindestens ein nichtwässriges Lösungsmittel und
- iii) mindestens ein Reaktionsprodukt eines Gemischs, umfassend:

a) mindestens ein Diamin, ausgewählt aus:

a1) einem geraden aliphatischen $C_2$- bis $C_{24}$-Diamin und/oder
a2) einem cycloaliphatischen $C_6$- bis $C_{18}$-Diamin und/oder
a3) einem aromatischen, vorzugsweise $C_6$- bis $C_{24}$-Diamin;

b) mindestens eine gesättigte hydroxylierte $C_3$-$C_{36}$Carbonsäure;
c) mindestens eine aus gesättigten geraden und nicht hydroxylierten $C_2$- bis $C_{18}$-Carbonsäuren ausgewählte Monosäure;

wobei die Zusammensetzung **dadurch gekennzeichnet ist, dass** sie eine bei 23 °C gemessene Viskosität von $10^1$ bis $10^7$ mPa.s hat.

**2.** Elektrolytzusammensetzung nach Anspruch 1, **dadurch gekennzeichnet, dass** das Lithiumsalz aus der aus $LiPF_6$ (Lithiumhexafluorphosphat), LiFSI, LiTDI, LiTFSI (Lithiumbis(trifluormethansulfonyl)imid), $LiPO_2F_2$, $LiB(C_2O_4)_2$, $LiF_2B(C_2O_4)$, $LiBF_4$, $LiNO_3$, $LiClO_4$ und deren Gemischen bestehenden Gruppe ausgewählt ist.

**3.** Elektrolytzusammensetzung nach einem der Ansprüche 1 oder 2, **dadurch gekennzeichnet, dass** das Lithiumsalz LiFSI ist.

**4.** Elektrolytzusammensetzung nach einem der Ansprüche 1 bis 3, **dadurch gekennzeichnet, dass** die gesamte molare Konzentration an Lithiumsalz(en) in der Elektrolytzusammensetzung von 0,01 mol/l bis 5 mol/l, vorzugsweise von 0,05 mol/l bis 3 mol/l reicht.

**5.** Elektrolytzusammensetzung nach einem der Ansprüche 1 bis 4, **dadurch gekennzeichnet, dass** das nichtwässrige Lösungsmittel aus der aus Ethern, Estern, Carbonaten, Ketonen, partiell hydrierten Kohlenwasserstoffen, Nitrilen, Amiden, Sulfoxiden, Sulfolan, Nitromethan, 1,3-Dimethyl-2-imidazolidinon, 1,3-Dimethyl-3,4,5,6-tetrahydro-2(1,H)-pyrimidinon, 3-Methyl-2-oxazolidinon und deren Gemischen bestehenden Gruppe ausgewählt ist.

**6.** Elektrolytzusammensetzung nach einem der Ansprüche 1 bis 5, **dadurch gekennzeichnet, dass** das nichtwässrige Lösungsmittel aus der aus Carbonaten, Ethern und deren Gemischen bestehenden Gruppe ausgewählt ist.

**7.** Elektrolytzusammensetzung nach einem der Ansprüche 1 bis 5, **dadurch gekennzeichnet, dass** der gesamte Massegehalt an nichtwässrigem Lösungsmittel bzw. nichtwässrigen Lösungsmitteln in der Elektrolytzusammensetzung höher als oder gleich 40 Gew.-%, vorzugsweise höher als oder gleich 50 Gew.-% und vorteilhafterweise höher als oder gleich 60 Gew.-%, bezogen auf das Gesamtgewicht der Zusammensetzung, ist.

8. Elektrolytzusammensetzung nach einem der Ansprüche 1 bis 6, **dadurch gekennzeichnet, dass** die geraden aliphatischen Diamine a1) aus der aus Ethylendiamin, Propylendiamin, Butylendiamin (oder Tetramethylendiamin), Pentamethylendiamin, Hexamethylendiamin bestehenden Gruppe ausgewählt sind und noch stärker bevorzugt das gerade aliphatische Diamin Ethylendiamin ist.

9. Elektrolytzusammensetzung nach einem der Ansprüche 1 bis 7, **dadurch gekennzeichnet, dass** die gesättigte hydroxylierte $C_3$-$C_{36}$Carbonsäure b) aus der aus 12-Hydroxystearinsäure (12-HSA), 9- oder 10-Hydroxystearinsäure (9-HSA oder 10-HSA), 14-Hydroxyeicosansäure (14-HEA) und deren Gemischen bestehenden Gruppe ausgewählt ist.

10. Elektrolytzusammensetzung nach einem der Ansprüche 1 bis 8, **dadurch gekennzeichnet, dass** die Monosäure c) aus Essigsäure, Propionsäure, Buttersäure, Pentansäure, Hexansäure (Capronsäure), Heptansäure, Octansäure, Decansäure und deren Gemischen ausgewählt ist.

11. Elektrolytzusammensetzung nach einem der Ansprüche 1 bis 10, **dadurch gekennzeichnet, dass** das Molverhältnis Diamin a)/(gesättigte hydroxylierte Carbonsäure b + Monosäure c) von 0,9 bis 1,1, vorzugsweise von 0,95 bis 1,05 reicht und noch stärker bevorzugt 1/1 beträgt.

12. Elektrolytzusammensetzung nach einem der Ansprüche 1 bis 11, **dadurch gekennzeichnet, dass** sie mindestens ein Reaktionsprodukt eines Gemischs umfasst, umfassend:

    a) mindestens ein gerades aliphatisches $C_2$- bis $C_{24}$-Diamin, das vorzugsweise aus Hexamethylendiamin und Ethylendiamin ausgewählt ist;
    b) mindestens eine gesättigte hydroxylierte $C_3$-$C_{36}$Carbonsäure;
    c) mindestens eine aus gesättigten geraden und nicht hydroxylierten $C_2$- bis $C_{18}$-Carbonsäuren ausgewählte Monosäure.

13. Elektrolytzusammensetzung nach einem der Ansprüche 1 bis 12, **dadurch gekennzeichnet, dass** der gesamte Massegehalt an Reaktionsprodukt(en) iii) in der Elektrolytzusammensetzung von 0,5 bis 20 Gew.-%, vorzugsweise von 1 bis 15 Gew.-% und noch stärker bevorzugt von 2 bis 10 Gew.-%, bezogen auf das Gesamtgewicht der Zusammensetzung, reicht.

14. Elektrolytzusammensetzung nach einem der Ansprüche 1 bis 13, **dadurch gekennzeichnet, dass** das Molverhältnis von gesättigter hydroxylierter Carbonsäure b/(gesättigter hydroxylierter Carbonsäure b + Monosäure c) von 0,01 bis 0,99, vorzugsweise von 0,05 bis 0,95 reicht.

15. Elektrolytzusammensetzung nach einem der Ansprüche 1 bis 14, **dadurch gekennzeichnet, dass** sie mindestens ein Elektrolytadditiv umfasst, das vorzugsweise aus der aus Fluorethylencarbonat, Vinylencarbonat, Difluorethylencarbonat, 4-Vinyl-1,3-dioxolan-2-on, Pyridazin, Vinylpyridazin, Chinolin, Vinylchinolin, Butadien, Sebaconitril, Alkyldisulfiden, Fluortoluol, 1,4-Dimethoxytetrafluortoluol, t-Butylphenol, Di-t-butylphenol, Tris(pentafluorphenyl)boran, Oximen, aliphatischen Epoxiden, halogenierten Biphenylen, Methacrylsäuren, Allylethylcarbonat, Vinylacetat, Divinyladipat, Acrylnitril, 2-Vinylpyridin, Maleinsäureanhydrid, Methylcinnamat, Phosphonaten, ein Vinyl enthaltenden Silanverbindungen, 2-Cyanofuran, Lithium(bisoxalatoborat) (LiBOB), Lithiumdifluoroxalatoborat, $LiPO_2F_2$ und deren Gemischen bestehenden Gruppe ausgewählt ist.

16. Elektrochemische Zelle, die eine negative Elektrode, eine positive Elektrode und eine Elektrolytzusammensetzung nach einem der Ansprüche 1 bis 15 enthält, die insbesondere zwischen die negative Elektrode und die positive Elektrode eingebracht ist.

17. Zelle nach Anspruch 16, **dadurch gekennzeichnet, dass** die negative Elektrode als elektrochemisches Aktivmaterial Lithium umfasst.

18. Batterie, vorzugsweise Li-Ion-Batterie, die die elektrochemische Zelle nach einem der Ansprüche 16 oder 17 enthält.

19. Verwendung der Elektrolytzusammensetzung nach einem der Ansprüche 1 bis 15 in einer elektrochemischen Zelle,

die mindestens eine negative Elektrode umfasst, die Lithium und insbesondere Lithium-Metall umfasst, zum Verringern oder Verhindern des Wachstums von Lithiumdendriten auf der Oberfläche der Elektrode.

## Claims

**1.** An electrolyte composition comprising:

- i) at least one lithium salt;
- ii) at least one nonaqueous solvent; and
- iii) at least one product from reaction of a mixture comprising:

a) at least one diamine selected from:

a1) a linear aliphatic $C_2$ to $C_{24}$ diamine; and/or
a2) a cycloaliphatic $C_6$ to $C_{18}$ diamine; and/or
a3) an aromatic, preferably $C_6$ to $C_{24}$, diamine;

b) at least one saturated hydroxylated $C_3$-$C_{36}$ carboxylic acid;
c) at least one monoacid selected from saturated linear and non-hydroxylated $C_2$ to $C_{18}$ carboxylic acids;

said composition being **characterized in that** it has a viscosity measured at 23°C ranging from $10^1$ to $10^7$ mPa.s.

**2.** The electrolyte composition as claimed in claim 1, **characterized in that** the lithium salt is chosen from the group consisting of $LiPF_6$ (lithium hexafluorophosphate), LiFSI, LiTDI, LiTFSI (lithium bis(trifluorosulfonyl)imide), $LiPOF_2$, $LiB(C_2O_4)_2$, $LiF_2B(C_2O_4)_2$, $LiBF_4$, $LiNO_3$, $LiClO_4$, and mixtures thereof.

**3.** The electrolyte composition as claimed in either one of claims 1 and 2, **characterized in that** the lithium salt is LiFSI.

**4.** The electrolyte composition as claimed in any one of claims 1 to 3, **characterized in that** the total molar concentration of lithium salt(s) in the electrolyte composition ranges from 0.01 mol/l to 5 mol/l, preferably from 0.05 mol/l to 3 mol/l.

**5.** The electrolyte composition as claimed in any one of claims 1 to 4, **characterized in that** the nonaqueous solvent is chosen from the group consisting of ethers, esters, carbonates, ketones, partially hydrogenated hydrocarbons, nitriles, amides, sulfoxides, sulfolane, nitromethane, 1,3-dimethyl-2-imidazolidinone, 1,3-dimethyl-3,4,5,6-tetrahydro-2(1H)-pyrimidinone, 3-methyl-2-oxazolidinone and mixtures thereof.

**6.** The electrolyte composition as claimed in any one of claims 1 to 5, **characterized in that** the nonaqueous solvent is chosen from the group consisting of carbonates, ethers and mixtures thereof.

**7.** The electrolyte composition as claimed in any one of claims 1 to 5, **characterized in that** the total weight content of nonaqueous solvent(s) in the electrolyte composition is greater than or equal to 40% by weight, preferably greater than or equal to 50% by weight, and advantageously greater than or equal to 60% by weight relative to the total weight of the composition.

**8.** The electrolyte composition as claimed in any one of claims 1 to 6, **characterized in that** the linear aliphatic diamines a1) are chosen from the group consisting of ethylenediamine, propylenediamine, butylene (or tetramethylene) diamine, pentamethylenediamine, hexamethylenediamine, and even more preferably, the linear aliphatic diamine is ethylenediamine.

**9.** The electrolyte composition as claimed in any one of claims 1 to 7, **characterized in that** the saturated hydroxylated $C_3$-$C_{36}$ carboxylic acid b) is chosen from the group consisting of 12-hydroxystearic acid (12-HSA), 9- or 10-hydroxystearic acid (9-HSA or 10-HSA), 14-hydroxyeicosanoic acid (14-HEA), and mixtures thereof.

**10.** The electrolyte composition as claimed in any one of claims 1 to 8, **characterized in that** the monoacid c) is chosen from acetic acid, propionic acid, butyric acid, pentanoic acid, hexanoic (caproic) acid, heptanoic acid, octanoic acid, decanoic acid and mixtures thereof.

**11.** The electrolyte composition as claimed in any one of claims 1 to 10, **characterized in that** the diamine a)/(saturated hydroxylated carboxylic acid b + monoacid c) molar ratio ranges from 0.9 to 1.1, preferably from 0.95 to 1.05, and even more preferentially is 1/1.

**12.** The electrolyte composition as claimed in any one of claims 1 to 11, **characterized in that** it comprises at least one product from reaction of a mixture comprising:

a) at least one linear aliphatic $C_2$ to $C_{24}$ diamine preferably chosen from hexamethylenediamine and ethylenediamine;
b) at least one saturated hydroxylated $C_3$-$C_{36}$ carboxylic acid;
c) at least one monoacid selected from saturated linear and non-hydroxylated $C_2$ to $C_{18}$ carboxylic acids.

**13.** The electrolyte composition as claimed in any one of claims 1 to 12, **characterized in that** the total weight content of reaction product(s) (iii) in the electrolyte composition ranges from 0.5% to 20% by weight, preferably from 1% to 15% by weight, and even more preferentially from 2% to 10% by weight relative to the total weight of the composition.

**14.** The electrolyte composition as claimed in any one of claims 1 to 13, characterized that the molar ratio of the saturated hydroxylated carboxylic acid b/(saturated hydroxylated carboxylic acid b + monoacid c) ranges from 0.01 to 0.99, preferably from 0.05 to 0.95.

**15.** The electrolyte composition as claimed in any one of claims 1 to 14, **characterized in that** it comprises at least one electrolytic additive preferably chosen from the group consisting of fluoroethylene carbonate, vinylene carbonate, difluoroethylene carbonate, 4-vinyl-1,3-dioxolan-2-one, pyridazine, vinyl pyridazine, quinoline, vinyl quinoline, butadiene, sebaconitrile, alkyl disulfides, fluorotoluene, 1,4-dimethoxytetrafluorotoluene, t-butylphenol, di-t-butylphenol, tris(pentafluorophenyl)borane, oximes, aliphatic epoxides, halogenated biphenyls, methacrylic acids, allylethyl carbonate, vinyl acetate, divinyl adipate, acrylonitrile, 2-vinylpyridine, maleic anhydride, methyl cinnamate, phosphonates, vinyl-containing silane compounds, 2-cyanofuran, lithium bis(oxalato)borate, lithium difluoro(oxalato)borate, $LiPO_2F_2$, and mixtures thereof.

**16.** An electrochemical cell comprising a negative electrode, a positive electrode and an electrolyte composition as defined here in any one of claims 1 to 15, in particular interposed between the negative electrode and the positive electrode.

**17.** The cell as claimed in claim 16, **characterized in that** the negative electrode comprises lithium as electrochemically active material.

**18.** A battery, preferably a Li-ion battery, comprising the electrochemical cell as claimed in either of claims 16 and 17.

**19.** The use of the electrolyte composition as claimed in any one of claims 1 to 15 in an electrochemical cell comprising at least one negative electrode comprising lithium, and in particular lithium metal, for reducing or eliminating the growth of lithium dendrites on the surface of said electrode.

[Fig. 1]

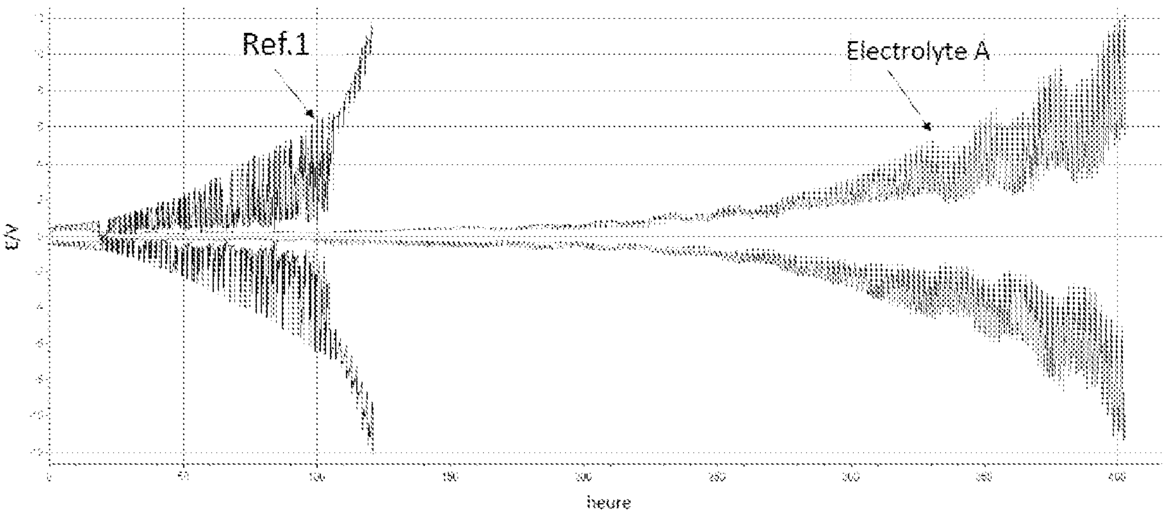

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 0971431 A2
- US 2017117584 A1
- KR 20190033453 A
- US 9257719 B1
- WO 2015158979 A
- WO 2013072591 A


### Littérature non-brevet citée dans la description


- *CHEMICAL ABSTRACTS,* N°646-06-0
- *CHEMICAL ABSTRACTS,* 96-49-1
- *CHEMICAL ABSTRACTS,* 108-32-7
- *CHEMICAL ABSTRACTS,* 4437-85-8
- *CHEMICAL ABSTRACTS,* 616-38-6
- *CHEMICAL ABSTRACTS,* 105-58-8
- *CHEMICAL ABSTRACTS,* 623-53-0
- *CHEMICAL ABSTRACTS,* 102-09-0
- *CHEMICAL ABSTRACTS,* 13509-27-8
- *CHEMICAL ABSTRACTS,* 623-96-1
- *CHEMICAL ABSTRACTS,* 1333-41-1
- *CHEMICAL ABSTRACTS,* 872-36-6
- *CHEMICAL ABSTRACTS,* 114435-02-8
- *CHEMICAL ABSTRACTS,* 167951-80-6
- **B.K. CHOI ; Y.W. KIM.** *Electrochim Acta.,* 2004, 2307-2313